# EUROPÄISCHE PATENTSCHRIFT

(11) **EP 0 417 399 B1**
(45) Veröffentlichungstag und Bekanntmachung des Hinweises auf die Patenterteilung: **19.01.1994**
(21) Anmeldenummer: 90109793.1
(22) Anmeldetag: 23.05.1990
(51) Int. Cl.: B61F 5/52

(54) **Drehgestell für ein Schienenfahrzeug**
Bogie for railway vehicle
Bogie pour véhicule ferroviaire

(30) Priorität: 15.09.1989 DE 3930875
(43) Veröffentlichungstag der Anmeldung: 20.03.1991
(73) Patentinhaber: Eurocopter Deutschland Gesellschaft mit beschränkter Haftung, D-81611 München (DE)
(72) Erfinder: Leo, Rolf, D-8857 Wertingen (DE); Oefner, Walter, D-8156 Otterfing (DE); Nowak, Franz, D-8028 Taufkirchen (DE)
(74) Vertreter: Frick, Gerhard, Dipl.-Ing.

(56) Entgegenhaltungen:
- EP-A- 0 260 440
- DE-A- 3 612 797
- RAILWAY GAZETTE INTERNATIONAL, Band 142, Nr. 9, September 1986, Seiten 632-633; R.J. LEO et al.: "Fibre-composite bogies on test"

## Beschreibung

Die Erfindung bezieht sich auf ein Drehgestell für ein Schienenfahrzeug, nach dem Oberbegriff des Patentanspruchs 1.

Bei bekannten Drehgestellen dieser Art (DE-PS 36 12 797) besteht der Drehgestellrahmen aus einer doppel-H-förmigen, einteiligen Faserverbundstruktur mit zwei, an ihren Enden die Radsatzlager abstützenden Längs- und mit diesen integral verbundenen, biegesteifen Querträgern, wobei die Faserverbundstruktur zusätzlich zur Trag- und Führungsfunktion auch die Aufgabe der Primärfederung übernimmt. Zur Erzielung der für die Laufstabilität des Drehgestells notwendigen Schubsteifigkeit des Rahmens in Drehgestellebene, also der sog. antimetrischen Längssteifigkeit, ist zwischen den Querträgern in der Drehgestell-Mitte ein mit den Längsträgern verschraubtes, plattenförmiges Versteifungsteil eingesetzt, welches mit Lasteinleitungsstellen für die Längs- und Querabstützung des Wagenkastens versehen und zwischen den Lasteinleitungsstellen und den Längsträgern mittels einstückig angeformter, als Faserverbund-Wickelkörper ausgebildeter Verstärkungsrippen biegefest ausgebildet ist. In der praktischen Erprobung haben sich die überlegenen Laufeigenschaften eines derartigen Drehgestells bestätigt.

Aufgabe der Erfindung ist es, das Drehgestell der eingangs genannten Art so auszubilden, daß eine rationelle, kostengünstige Serienfertigung des Drehgestellrahmens aus wenigen, einfach herzustellenden Bauteilen ermöglicht wird.

Diese Aufgabe wird erfindungsgemäß durch das im Patentanspruch 1 gekennzeichnete Drehgestell gelöst.

Erfindungsgemäß ist der Drehgestellrahmen aufgrund der beanspruchten Modulbauweise derart in einzelne, austauschbare Rahmenkomponenten, nämlich die Mittelstruktur und die beiden an dieser über baugleiche Eckverbindungen befestigten, identischen Längsträger, unterteilt, daß die Einzelkomponenten auf fertigungstechnisch einfache Weise und zeitlich parallel hergestellt und mit geringem Montageaufwand zum fertigen Drehgestellrahmen zusammengeoaut werden können. Dabei besteht ein unter dem Gesichtspunkt einer rationellen Fertigung wesentlicher Aspekt der Erfindung darin, daß jede Grundfunktion, wie Torsionsweichheit, Primärfedersteifigkeit oder Tragfestigkeit, und - abmessung des Rahmens individuell durch konstruktive Modifikation allein einer einzigen Rahmenkomponente in weiten Grenzen variabel ist, ohne daß die übrigen Rahmenbauteile geändert werden müssen. Dies gestattet eine kostensparende Fertigung baugleicher Rahmenkomponenten in hohen Stückzahlen für einen großen Einsatzbereich des Drehgestellrahmens, der sowohl den Nahverkehrs-, den Fernverkehrs- und den Hochgeschwindigkeitsbereich wie auch die Verwendung des Drehgestellrahmens für Güterwagen-, Personenwagen- und Trieb-Drehgestelle umfaßt. Hinzu kommt, daß sich durch die Verbindung des zentralen Versteifungs-und der Querträgerabschnitte zu einer einteiligen Mittelstruktur, die an den Längsträgern über die in Längsträgerrichtung mit großer Stützweite auseinanderliegenden Eckverbindungen zwischen Quer- und Längsträgern befestigt ist, eine wesentliche höhere, konstruktive Schubsteifigkeit des Drehgestellrahmens ergibt als bei einer Rahmenbauweise mit voneinander getrennt ausgebildeten und längsträgerseitig verbundenen Querträgern und Rahmenversteifungselement.

Mit der erfindungsgemäßen Rahmenkonstruktion sind daher im Sinne einer kostengünstigen Serienfertigung auch schon künftige Einsatzfälle mit wesentlich höheren Fahrgeschwindigkeiten berücksichtigt, für die eine deutlich erhöhte, antimetrische Längssteifigkeit unter Beibehalt eines geringen Bau- und Gewichtsaufwandes des Drehgestellrahmens gefordert wird.

In weiterer, bevorzugter Ausgestaltung der Erfindung ist gemäß Anspruch 2 jeder Querträgerabschnitt der Mittelstruktur als C-förmig zum jeweils anderen Querträgerabschnitt hin geöffnetes Faserverbund-Hohlprofil ausgebildet. Hierdurch läßt sich die Torsionssteifigkeit des Drehgestellrahmens, im Vergleich zu im Querschnitt geschlossenen Querträgeranordnungen, deutlich reduzieren und die Fertigung der Mittelstruktur wird weiter vereinfacht. Eine fertigungstechnisch besonders einfache Ausbildung der Faserverbund-Mittelstruktur wird gemäß Anspruch 3 dadurch erreicht, daß diese vorzugsweise als im Bereich des Versteifungsabschnitts ebenes, randseitig im Bereich der Querträgerabschnitte hohlprofilförmig umgebogenes Faserverbund-Plattenteil ausgebildet ist.

Ein weiterer wesentlicher Aspekt der Erfindung besteht gemäß Ansprüchen 4 - 6 in der besonderen Gestaltung der Eckverbindungen. So wird durch die Eckverbindungen gemäß Anspruch 4 vorzugsweise eine doppelt, nämlich zum einen über die Verschraubungen und zum anderen formschlüssiggesicherte, lösbare Verkoppelung zwischen Mittelstruktur und Längsträgern erzielt. Die gemäß Anspruch 5 bevorzugte Ausbildung der Eckverbindungen bietet die Möglichkeit, die Torsionsweichheit des Drehgestellrahmens nicht nur durch konstruktive Modifikation der Querträgerabschnitte der Mittelstruktur, sondern auch durch Änderung des torsionssteifen Verbindungselementes, insbesondere seiner Eingriffslänge, zu variieren, und gemäß Anspruch 6 wird die torsionsversteifende Wirkung der Verbindungselemente vorzugsweise dazu ausgenutzt, die aus den Bremskräften resultierenden Torsionsmomente ohne störende Kraftüberlagerungen auf direktem Wege in die Längsträger einzuleiten.

Ein Ausführungsbeispiel der Erfindung wird anhand der Zeichnungen näher erläutert. Es zeigt in schematischer Darstellung:
- Fig. 1: die Aufsicht eines Schienenfahrzeug-Drehgestells;
- Fig. 2: einen Teilschnitt längs der Linie II-II der Fig. 1;
- Fig. 3: einen Teilschnitt längs der Linie III-III der Fig. 2.

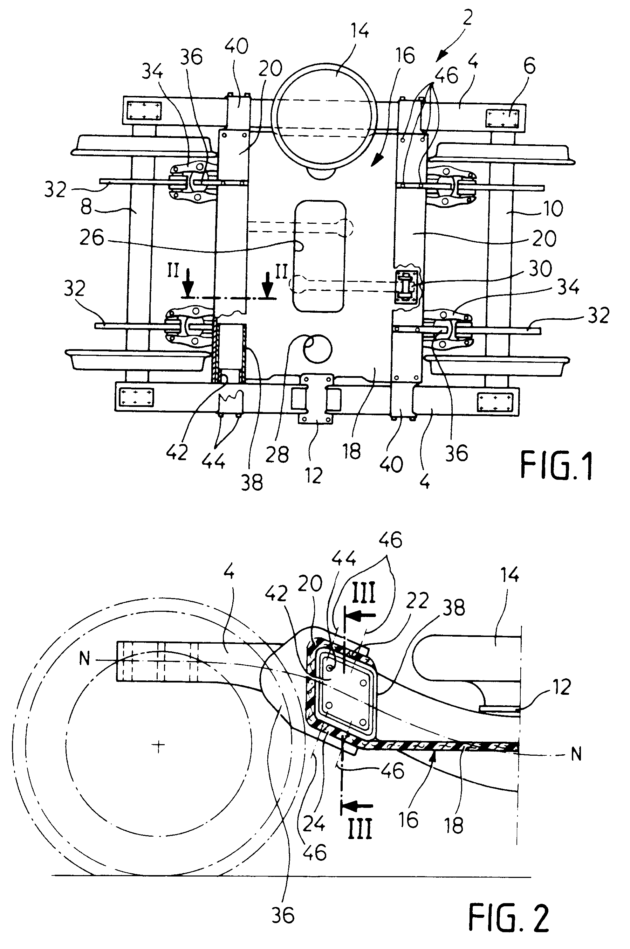

Das in den Figuren gezeigte Drehgestell enthält einen Doppel-H-Drehgestellrahmen 2 in Faserverbundbauweise, der außer den Trag- und Führungsaufgaben auch die Aufgabe der Primärfederung übernimmt, mit zwei baugleichen Längsträgern 4, die ein definiertes, sich in Längsrichtung änderndes Elastizitätsverhalten senkrecht zur Drehgestellebene, also zur Zeichenebene der Fig. 1 aufweisen und an deren relativ elastisch ausgebildeten Endabschnitten die Radsatzlager 6 für den vorderen bzw. hinteren Radsatz 8 bzw. 10 des Drehgestells angeordnet sind. Entsprechend der sich verringernden Biegeelastizität nimmt die Bauhöhe jedes Längsträgers 4 zur Längsträgermitte hin, wo sich der Abstützpunkt in Form einer Stützplatte 12 und einer Luftfeder 14 für die senkrechte Wagenabstützung befindet, stetig zu. Die Längsträger 4 sind miteinander durch eine symmetrisch zur Drehgestellmitte ausgebildete Mittelstruktur 16 verkoppelt, die ein Integralbauteil aus Faserverbundwerkstoff ist, welches aus einem zentralen, plattenförmigen, als Schubfeld wirkenden Rahmenversteifungsabschnitt 18 und einstückig an diesen angeformten, vorderen und hinteren, jeweils radnahen Querträgerabschnitten 20 besteht.

Die Querträgerabschnitte 20 sind jeweils als C-förmig zum zentralen Versteifungsabschnitt 18 hin geöffnetes Hohlprofil ausgebildet, und die Mittelstruktur 16 ist durchgehend aus ± 45°-Faserlagen aufgebaut, die in den Ober- und Untergurtbereichen 22, 24 der Querträgerabschnitte 20 durch in Querträgerrichtung unidirektional verlaufende Faserstränge verstärkt sind. Aufgrund dieser Bauweise bewirkt die Mittelstruktur 16, die im Bereich der Querträgerabschnitte 20 auf die weiter unten erläuterte Weise fest mit den Längsträgern 4 verbunden ist, eine sehr biegesteife, in Drehgestellebene hochgradig schubsteife und je nach Ausbildung der Querträgerabschnitte 20 variabel torsionsweiche, gegenseitige Verkoppelung der Längsträger 4.

Im Bereich des Versteifungsabschnitts 18 ist die Mittelstruktur 16 mit einer zentralen Aussparung 26 zur Aufnahme der Drehzapfenanordnung sowie seitlich davon mit Durchbrüchen 28 versehen, an denen die aus der Wagenkastenanlenkung resultierenden, in Drehgestellebene wirkenden Querkräfte über Querpuffer und Dämpfer (nicht gezeigt) eingeleitet werden.

Weitere Lasteinleitungsstellen in Form von Elastomerlagern 30, an denen die in Fig. 1 gestrichelt dargestellten Lemniskatenlenker für die Wagenkastenanlenkung in Drehgestell-Längsrichtung gelagert sind, befinden sich im Hohlprofilinneren der Querträgerabschnitte 20.

Ferner sind an der Mittelstruktur 16 die mit den Bremsscheiben 32 der Radsätze 8, 10 zusammenwirkenden Scheibenbremsvorrichtungen 34 über Bremsträger 36 befestigt, die jeweils an die längsträgerseitigen Endbereiche der Querträgerabschnitte 20 angeschlossen, z. B. mit diesen verschraubt sind. Zur Aufnahme der durch die Bremskräfte verursachten, über die Bremsträger 36 eingeleiteten Torsionsmomente sind die Querträgerabschnitte 20 in ihren Endbereichen zwischen Bremstrager 36 und Verbindungsstelle zum Längsträger 4 jeweils durch im Querschnitt geschlossene, torsionssteif in Faserverbundbauweise ausgebildete, hohlprofilförmige Verbindungselemente 38 verstärkt, die eine der C-Profilform der Querträgerabschnitte 20 entsprechende Querschnittskonfiguration besitzen und mit diesen fest verbunden, z. B. verschraubt und/oder verklebt sind. Durch die Verbindungselemente 38 wird die Torsionssteifigkeit der Mittelstruktur 16 im Endbereich der Querträgerabschnitte 20 auf ein zur Übertragung der über die Bremsträger 36 eingeleiteten Bremsmomente ausreichendes Maß erhöht. Bei kurzer Eingriffslänge der Verbindungselemente 38 behalten die Querträgerabschnitte 20 ihre offene C-Profilform und somit ihre geringe Torsionssteifigkeit über den größten Teil ihrer Länge bei, so daß die Verwindungsweichheit der Mittelstruktur 16 trotz ausreichend sicherer Fixierung der Scheibenbremsvorrichtungen 34 im wesentlichen nicht beeinträchtigt wird. Werden die Verbindungselemente 38 jedoch länger bemessen, so nimmt ihre Versteifungswirkung auf die Querträgerabschnitte 20 zu, so daß sich auch allein durch konstruktive Modifikation der Verbindungselemente 38 die Verwindungsweichheit des Drehgestellrahmens 2 in einem weiten Bereich variieren läßt. Bei mehr als zwei Scheibenbremsen 34 je Radsatz 8 bzw. 10 werden auch diese über die beiden Bremsträger 36 an der Mittelstruktur 16 bzw. den Verbindungselementen 38 abgestützt.

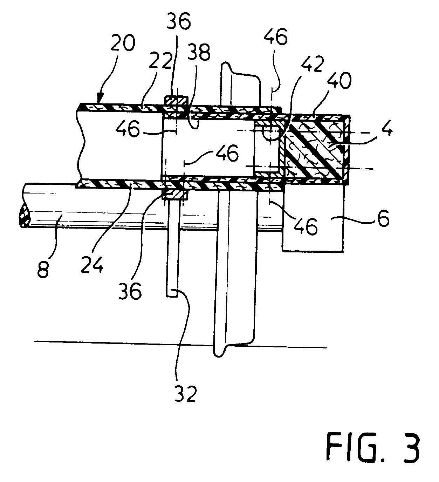

Die Eckverbindungen zwischen den Querträgerabschnitten 20 der Mittelstruktur 16 und den Längsträgern 4 enthalten einerseits die formschlüssigen Verbindungselemente 38, welche mit einstückig angeformten, schlaufenförmig über die Querträgerenden vorstehenden Wandabschnitten 40 versehen sind, die die Längsträger 4 querschnittskonform umschließen ( Fig. 3), und andererseits Schraubverbindungen 42, 44, die jeweils aus einem innenseitig am Ende der Verbindungselemente 38 befestigten, topfförmigen Metallbeschlag 42 und entsprechenden Befestigungsschrauben 44 und 46 bestehen.

Zur Herstellung des Drehgestellrahmens 2 werden die Längsträger 4, die Mittelstruktur 16 und die kastenrohrförmigen Verbindungselemente 38 einschließlich ihrer laschenförmigen Wandabschnitte 40 jeweils einzeln aus Faserverbundwerkstoff vorgefertigt und ausgehärtet und anschließend werden die Verbindungselemente 38 von den verjüngten Enden der Längsträger 4 aus auf diese aufgeschoben und mittels der Metallbeschläge 42 und Verbindungsschrauben 44 in der Einbaulage befestigt, woraufhin die Mittelstruktur 16 auf die Verbindungselemente 38 aufgesteckt und mit diesen und den Metallbeschlägen 42 über die Befestigungsschrauben 46 fest verbunden wird. Wie aus Fig. 2 ersichtlich, befindet sich der ebene Versteigungsabschnitt 18 der Mittelstruktur 16 in der Einbaulage im wesentlichen in Höhe der neutralen Biegelinie N-N der Längsträger 4.

Der so zusammengebaute Drehgestellrahmen 2 wird durch Montage der übrigen Baukomponenten, wie Scheibenbremsen, Radsatzlager, Elastomerlager usw., zum fertigen Drehgestell komplettiert.

## Patentansprüche

1. Drehgestell für ein Schienenfahrzeug, mit einem Drehgestellrahmen (2) in Faserverbundbauweise, bestehend aus zwei an ihren Enden die Radsatzachsen (8, 10) lagernden Längsträgern (4), die im Bereich zwischen den Radsätzen durch einen vorderen Querträger und einen hinteren Querträger (20) sowie ein zwischen den Querträgern angeordnetes Rahmenversteifungsteil schubsteif (16), aber torsionsweich miteinander verbunden sind,
dadurch gekennzeichnet, daß
der Drehgestellrahmen (2) aus drei getrennt voneinander jeweils in Integralbauweise vorgefertigten Faserverbund-Rahmenkomponenten (4, 16) besteht, nämlich den beiden Längsträgern (4) und einer einteilig den zentralen Rahmenversteifungsabschnitt sowie die vorderen und hinteren Querträgerabschnitte (18, 20) umfassenden Mittelstruktur (16), und daß die Längsträger und die Mittelstruktur im Bereich der Querträgerabschnitte mit Hilfe von starren Eckverbindungen (38, 40, 42,44) austauschbar zum Drehgestellrahmen zusammengefügt sind.

2. Drehgestell nach Anspruch 1,
dadurch gekennzeichnet, daß
jeder Querträgerabschnitt (20) der Mittelstruktur (16) als C-förmig zum jeweils anderen Querträgerabschnitt hin geöffnetes Faserverbund-Hohlprofil ausgebildet ist.

3. Drehgestell nach Anspruch 1 oder 2,
dadurch gekennzeichnet, daß
die Mittelstruktur (16) als im Bereich des Versteifungsabschnitts (18) ebenes, randseitig im Bereich der Querträgerabschnitte (20) hohlprofilförmig umgebogenes Faserverbundplattenteil ausgebildet ist.

4. Drehgestell nach einem der vorhergehenden Ansprüche,
dadurch gekennzeichnet,daß
die Mittelstruktur (16) über die Eckverbindungen (38, 40, 42, 44) sowohl formschlüssig wie auch durch Verschraubungen (42, 44, 46) lösbar mit den Längsträgern (4) verkoppelt ist.

5. Drehgestell nach Anspruch 4,
dadurch gekennzeichnet, daß
die Eckverbindungen (38, 40, 42, 44) jeweils ein formschlüssig einerseits den Längsträger (4) umgreifendes und andererseits drehmomentenübertragend in den Endbereich des Querträgerabschnitts (20) der Mittelstruktur (16) eingreifendes, torsionssteifes Verbindungselement (38) enthalten.

6. Drehgestell nach Anspruch 5,
dadurch gekennzeichnet, daß
an den Querträgerabschnitten (20) oder Mittelstruktur(16) im Eingriffsbereich der torsionssteifen Verbindungselemente (38) Bremsträger (36) für die Bremsvorrichtungen (34) befestigt sind.

## Claims

1. A bogie for a rail vehicle, comprising a bogie frame of fibre-composite construction which is composed of two longitudinal supports (4), to their ends of which are mounted the axes of a set of wheels (10) and which are interconnected with shearing rigidity but torsional resilience in the area between theZsets of wheels by means of a front transverse support and a rear transverse support (20) as well as a a frame stiffening element positioned between the transverse supports, **characterised in that** the bogie frame (2) is composed of three fibre-composite frame components (4, 16), which are separately prefabricated in an integral assembly, i.e. the two longitudinal supports (4) and a central structure (16), which in one piece includes the central frame-stiffening section as well as the front and rear transverse support sections (18, 20), and that the longitudinal supports and the central structure in the area of the transverse support sections are exchangeably assembled into a bogie frame by means of rigid corner connectors (38, 40, 42, 44).

2. A bogie according to claim 1, **characterised in that** each transverse support section (20) of the central structure (16) is arranged as a fibre composite hollow profile having a C-shaped opening towards the respective other transverse support section.

3. A bogie according to claim 1 or 2, **characterised in that** the central structure (16) is arranged as a fibre-composite plate element, which is plane in the area of the stiffening section (18), and at the edge in the area of the transverse support sections (20) bent in the form of a hollow profile.

4. A bogie according to one of the above claims, **characterised in that** the central structure (16) is coupled, both positively by means of the corner connectors (38, 40, 42, 44) and releasably by means of bolts (42, 44, 46), to the longitudinal supports (4).

5. A bogie according to claim 4, **characterised in that** the corner connectors (38, 40, 42, 44) comprise a torsion-resistant connecting element (38), which on the one side reaches positively around the longitudinal support (4), and on the other side engages torque-transmittingly into the end region of the transverse-support section (20) of the central structure (16).

6. A bogie according to claim 5, **characterised in that** brake carriers (36) for the braking devices (34) are attached to the transverse-support sections (20) of the central structure (16) in the engagement area of the torsion-resistant connecting elements (38).

## Revendications

1. Bogie pour un véhicule sur rails comprenant un châssis de bogie (2) en construction en matériau composite à renfort de fibres comportant deux longerons (4) qui supportent à leurs extrémités les axes d'essieux (8, 10) et qui sont reliés entre eux, dans la zone entre les paires de roues, par une traverse avant et une traverse arrière (20) ainsi que par un élément de raidissement (16) du châssis de façon rigide au cisaillement mais élastique en torsion, caractérisé par le fait que le châssis de bogie (2) est constitué de trois éléments de châssis (4, 16) en matériau composite à renfort de fibres préfabriqués séparément les uns des autres en construction monobloc, à savoir des deux longerons (4) et d'une structure centrale (16) d'une seule pièce comprenant la partie centrale de raidissement du châssis ainsi que les parties de traverse avant et arrière (18, 20), et que les longerons et la structure centrale sont réunis de façon interchangeable dans la zone des traverses à l'aide de liaisons d'angle rigides (38, 40, 42, 44) pour former le châssis de bogie.

2. Bogie selon la revendication 1, caractérisé par le fait que chaque partie de traverse (20) de la structure centrale (16) est un profilé creux en matériau composite à renfort de fibres en forme de C qui est ouvert en direction de l'autre partie de traverse.

3. Bogie selon la revendication 1 ou 2, caractérisé par le fait que la structure centrale (16) est une plaque en matériau composite à renfort de fibres qui est plane dans la zone de la partie de raidissement (18) et dont le bord est replié en forme de profilé creux dans la zone des parties de traverse (20).

4. Bogie selon l'une quelconque des revendications précédentes, caractérisé par le fait que la structure centrale (16) est couplée de façon démontable aux longerons (4) par l'intermédiaire des liaisons d'angles (38, 40, 42, 44), aussi bien par complémentarité de forme que par des vis (42, 44, 46).

5. Bogie selon la revendication 4, caractérisé par le fait que les liaisons d'angle (38, 40, 42, 44) comportent chacune un élément de liaison (38) rigide à la torsion qui entoure d'une part le longeron (4) par complémentarité de forme et pénètre d'autre part, avec transmission de couple, dans la zone d'extrémité de la partie de traverse (20) de la structure centrale (16).

6. Bogie selon la revendication 5, caractérisé par le fait que des supports de frein (36) pour les dispositifs de freinage (34) sont fixés sur les parties de traverse (20) de la structure centrale (16), dans la zone dans laquelle avancent les éléments de liaison (38) rigides en torsion.
